# EUROPEAN PATENT SPECIFICATION

(11) **EP 3 718 052 B1**
(45) Date of publication and mention of the grant of the patent: **26.04.2023**
(21) Application number: 18830049.5
(22) Date of filing: 30.11.2018
(51) Int. Cl.: G06K 19/02, G06K 19/077

(54) **FLEXIBLE FABRIC TAGS USING APERTURES IN A SUBSTRATE**
FLEXIBLE GEWEBEANHÄNGER MIT ÖFFNUNGEN IN EINEM SUBSTRAT
ÉTIQUETTES SOUPLES EN TISSU UTILISANT DES OUVERTURES DANS UN SUBSTRAT

(30) Priority: 01.12.2017 US 201762593609 P
(43) Date of publication of application: 07.10.2020
(73) Proprietor: Avery Dennison Retail Information Services LLC, Mentor, OH 44060 (US)
(72) Inventor: FORSTER, Ian, Chelmsford, Essex CM1 6LA (GB)
(74) Representative: HGF
(86) International application number: PCT/US2018/063350
(87) International publication number: WO 2019/108958

(56) References cited:
- WO-A2-2007/105009
- JP-A- 2005 310 054
- JP-A- 2007 314 925
- US-A1- 2001 002 874
- US-A1- 2004 129 786
- US-A1- 2008 074 272
- US-B1- 6 412 701

## Description

### BACKGROUND

The present invention relates generally to a flexible fabric tag. The tag comprises a conductor embedded into a flexible material that forms an antenna for a radio-frequency identification ("RFID") tag. The present subject matter is especially suitable for garments and other apparel items. Accordingly, the present specification makes specific reference thereto. However, it is to be appreciated that aspects of the present inventive subject matter are also equally amenable to other like applications.

Radio-frequency identification ("RFID") is the use of electromagnetic energy ("EM energy") to stimulate a responsive device (known as an RFID "tag" or transponder) to identify itself and in some cases, provide additionally stored data. RFID tags typically include a semiconductor device commonly called the "chip" on which are formed a memory and operating circuitry, which is connected to an antenna. Typically, RFID tags act as transponders, providing information stored in the chip memory in response to a radio frequency ("RF") interrogation signal received from a reader, also referred to as an interrogator. In the case of passive RFID devices, the energy of the interrogation signal also provides the necessary energy to operate the RFID device.

RFID tags may be incorporated into or attached to articles to be tracked. In some cases, the tag may be attached to the outside of an article with adhesive, tape, or other means and in other cases, the tag may be inserted within the article, such as being included in the packaging, located within the container of the article, or sewn into a garment. The RFID tags are manufactured with a unique identification number which is typically a simple serial number of a few bytes with a check digit attached. This identification number is incorporated into the tag during manufacture. The user cannot alter this serial/identification number and manufacturers guarantee that each serial number is used only once. Such read-only RFID tags typically are permanently attached to an article to be tracked and, once attached, the serial number of the tag is associated with its host article in a computer data base.

However, these sewn in RFID tags can be uncomfortable to the user as the tags tend to create uncomfortable ridges. Further, the sewn in RFID tags do not allow adequate marking surfaces and/or the printable surface is not flat and tends to be hard to read. WO 2007/105009 discloses RFID devices comprising a conductive track within a channel cut in the surface of a substrate, wherein a micro-circuit is arranged so that it is embedded in the channel or integrally formed in the substrate material. US 2008/0074272 discloses a textile information carrier consisting of a textile label or tag connected to the goods comprising an electric antenna and a detection wafer comprising an electronic chip module, connected to the textile label, textile goods or the tag. A coupling element connected to the electronic chip module is disposed on the detection wafer, said coupling element being inductively and/or capacitively coupled to the electric antenna of the textile label, the textile goods or the tag. US 5412701 describes a flexible IC module which comprises a flexible substrate and a mounted part supported by said flexible substrate, said mounted part being embedded in a dent formed by compression in a portion of the flexible substrate and said mounted part comprising an IC chip and a contactless transmission coil for data and/or electric source which is directly connected to input and output terminals of the IC chip.

The present invention discloses a flexible fabric tag that comprises a conductor embedded into a flexible material to form at least one channel. The embedded conductor forms an antenna for an RFID tag. The channel allows the conductor to be buried into the flexible material to prevent uncomfortable ridges and also creates a flat printable surface.

### SUMMARY

The invention is defined by claim 1.

Preferred embodiments are set out in the dependent claims.

In a preferred embodiment, the conductor is a wire or conductive ink that is embedded in the channel. Further, a second layer can be over-laminated on top of the channel. This layer can be used for multiple purposes, such as retaining the conductor, sealing the conductor, and/or presenting a smooth printable surface. Further, in an alternative embodiment, the conductor comprises a wire with an external coating. The coating has an initial state wherein the wire is dry and has a low adhesion and a second state wherein the coating becomes an adhesive and the wire becomes permanently cured at this state.

To the accomplishment of the foregoing and related ends, certain illustrative aspects of the disclosed innovation are described herein in connection with the following description and the annexed drawings. Other advantages and novel features will become apparent from the following detailed description when considered in conjunction with the drawings.

### BRIEF DESCRIPTION OF THE DRAWINGS

FIG. 1A illustrates a top perspective view of the channel formed in the flexible material in accordance with the disclosed architecture.
FIG. 1B illustrates a top view of an alternative channel formed in the flexible material in accordance with the disclosed architecture.
FIG. 2 illustrates a top perspective view of the channel filled with a wire in accordance with the disclosed architecture.
FIG. 3 illustrates a top perspective view of the channel filled with a conductive ink in accordance with the disclosed architecture.
FIG. 4 illustrates a top perspective view of the channel filled with a rectangular cross-section conductor in accordance with the disclosed architecture.
FIG. 5 illustrates a top perspective view of the flexible material being comprised of two layers in accordance with the disclosed architecture.
FIG. 6A, FIG. 6B, and FIG. 6C illustrate a top perspective view of the flexible material being cut and then bent to incorporate a conductor in accordance with the disclosed architecture.
FIG. 7 illustrates a top perspective view of the channel with an over-laminated layer on top in accordance with the disclosed architecture.
FIG. 8 illustrates a top perspective view of a wire with an additional coating on the outside in accordance with the disclosed architecture.
FIG. 9A illustrates a top perspective view of a wire being guided into the channel by a dispensing head in accordance with the disclosed architecture.
FIG. 9B illustrates a top view of a wire positioned in a channel formed in a flexible material in accordance with the disclosed architecture.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

The present invention discloses a flexible tag that comprises at least one conductor embedded into a flexible material, to form a channel. The flexible material is comprised of a top layer and a bottom layer, wherein the top layer is capable of absorbing laser energy at a given wavelength and the bottom layer does not absorb laser energy at said given wavelength. In one embodiment of the present invention, a range of circular wire diameters are available for use. For instance, single strand copper wires in the between 0.032mm and 0.08mm are common, although thinner and thicker materials can be used. Rectangular conductors in the form of strips will commonly be made of a foil slit or cut into strips.

A variety of foil thicknesses are also contemplated by the present invention. Common values for making printed circuit boards are between 0.0175mm and 0.035mm. One factor in the choice of conductor thickness in the present invention, is skin depth, and expression of how the current flows in the surface layers of the conductor. Generally, it may be considered that a conductor of five times skin depth is adequate for a frequency of 915MHz. For copper wire the skin depth is 0.00215mm, so approximately a copper wire with a diameter of greater than ^{∼}0.012mm may present a low loss to RF current. The wire / strip preferably fits inside the channel. In one embodiment, the channel is created with a laser. Although laser beam width is a function of the equipment used, a value of between 50um and 100um is common, and compatible with the wire diameters mentioned previously. The channel does not extend through the total depth of the flexible material. The conductor placed in the channel forms an antenna for an RFID tag when coupled to an RFID chip via direct or strap attach. The channel allows the conductor to be buried into the flexible material to prevent uncomfortable ridges and also creates a flat printable surface.

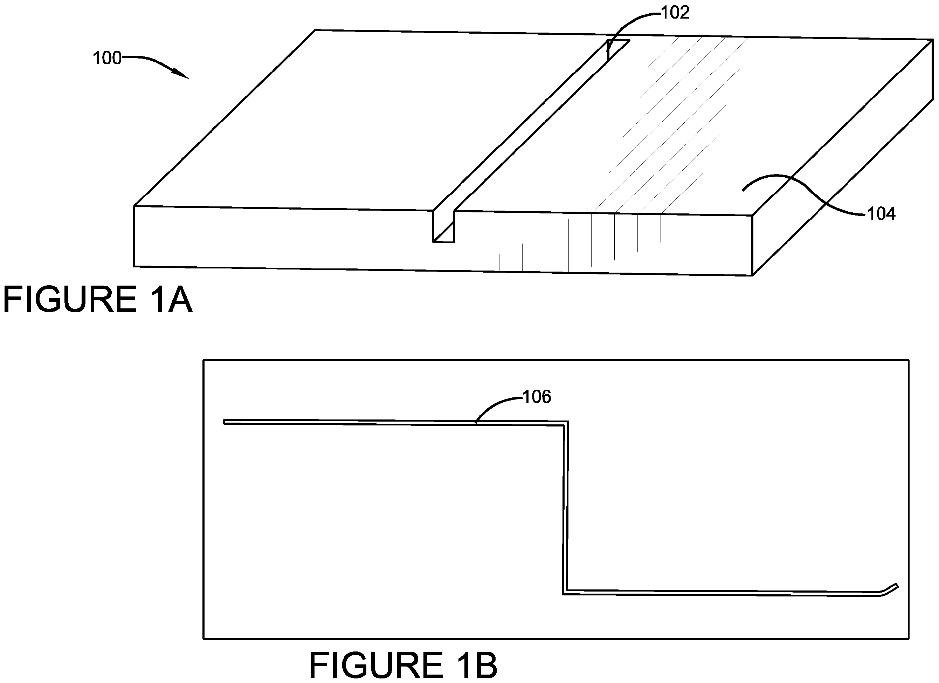

Referring initially to the drawings, FIGS. 1A-B illustrate a flexible fabric RFID tag device 100 wherein a channel 102 is formed in the flexible material 104. The material 104 can be any suitable material as is known in the art and is a flexible material like fabric, cloth, canvas, etc. In one embodiment, the channel 102 is shaped to form an antenna 106 but the channel 102 can be any suitable size, shape, and configuration as is known in the art without affecting the overall concept of the invention. One of ordinary skill in the art will appreciate that the shape and size of the channel 102 as shown in FIG. 1A is for illustrative purposes only and many other shapes and sizes of the channel 102 are well within the scope of the present disclosure. Additionally, the present invention is not limited to the creation of one channel 102, but also contemplates that more than one channel may be formed. Although dimensions of the channel 102 (i.e., length, width, and height) are important design parameters for good performance, the channel 102 may be any shape or size that ensures optimal performance. Preferably, the channel should be large enough so that the conductor is fully submerged below the surface with some tolerance, so for a 0.08mm wire it would be 0.1mm wide and 0.1mm deep.

The channel 102 or trench typically does not extend through the total depth of the material 104, and wherein the depth of the channel 102 can depend on a user's needs and/or wants and the depth is generally large enough, as previously mentioned so that a conductor may be contained within the channel with some tolerance. The channel 102 can be formed by various means such as utilizing a laser to ablate the material to a controlled depth, abrasion, milling, or chemical means using a masking material and solvent for the flexible material, or any other suitable means for forming the channel 102 as is known in the art.

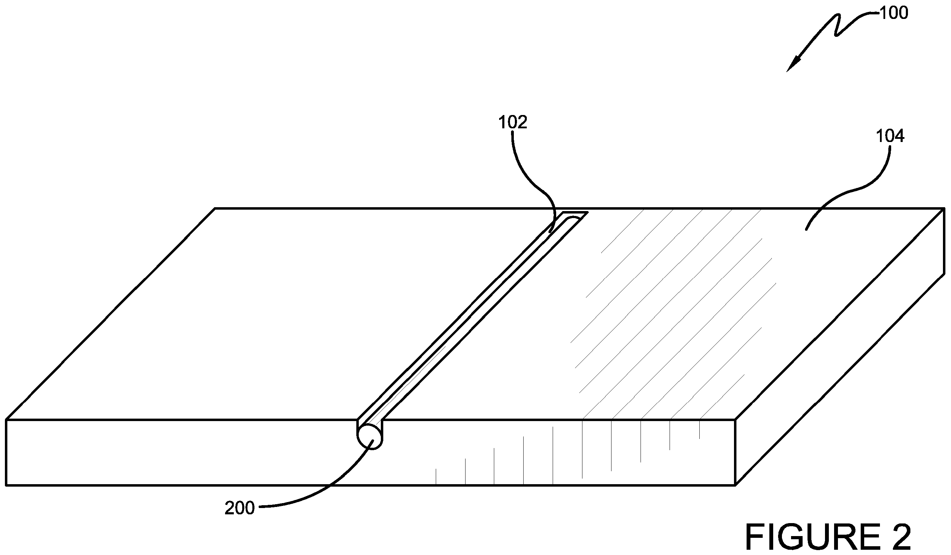

Additionally, a conductor is positioned in the channel 102 to form an antenna 106 for an RFID tag when coupled to an RFID chip. As shown in FIG. 2, the conductor can be a wire 200, in one embodiment. The wire 200 can be any suitable material as is known in the art such as copper, copper alloys, aluminum, silver coated materials, etc. In a preferred embodiment, the wire 200 embedded in the channel 102 would be flexible and made of copper.

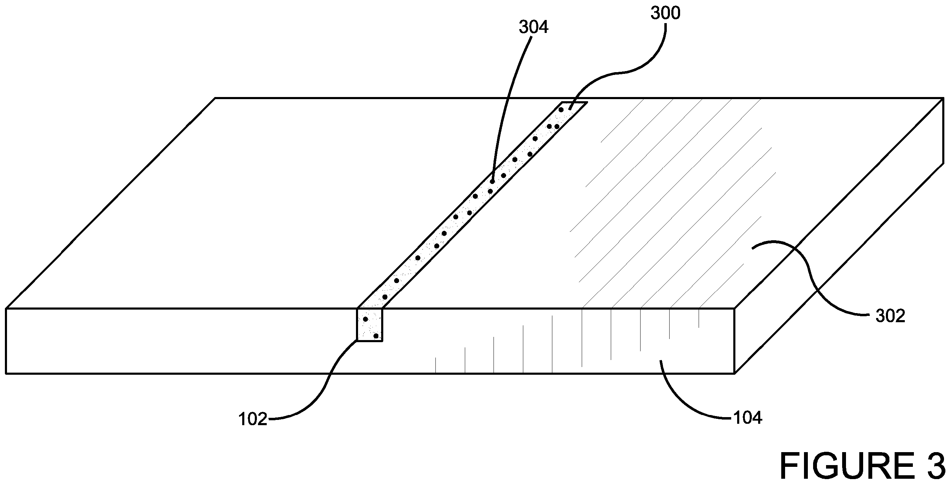

In another embodiment as shown in FIG. 3, the conductor can be a conductive ink 300 or other suitable conductive material as is known in the art. The channel 102 can be filled with conductive ink 300 by screening, printing, or any other suitable method as is known in the art. A suitable ink that may be used is DuPont^{®} ME101, a silver ink with good conductivity and the ability to bond to polyester. A thin conductive material could be placed into the channel in order to make a connection and then electroplate copper, or the channel could be filled with a catalyst and an electroless method could be used. In one embodiment, the top surface 302 of the flexible material 104 is coated in a silicone or other non-stick material, so that the applied conductive ink 300 can be easily wiped away leaving a filled channel 102. Further, in addition to the conductive ink 300, the channel 102 can be filled with additional conductive fillers 304 such as copper, silver, graphene, or a combination of these, or any other suitable conductive materials. In yet another embodiment, a metal layer could be deposited by vacuum evaporation.

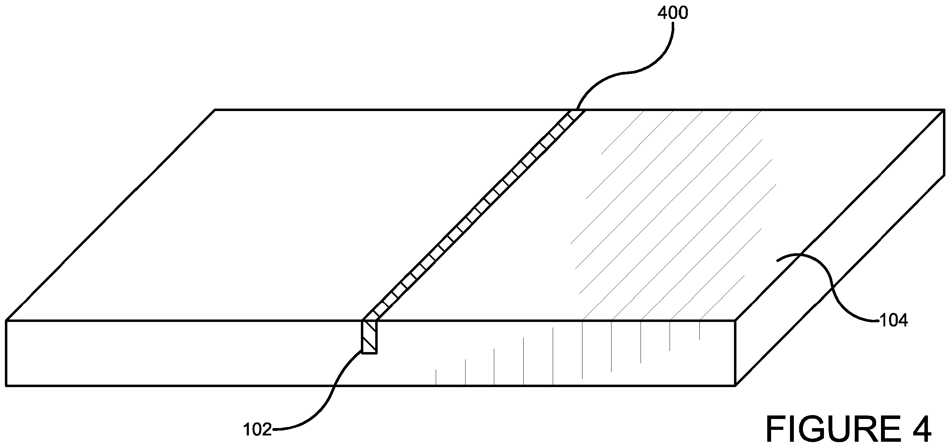

Alternatively, as shown in FIG. 4, the conductor can be a cross-sectioned conductor 400 which in one embodiment is rectangular. For example, the rectangular cross-sectioned conductor 400 can be a tape or a section of a conductive mesh made from copper wire or other suitable conductive materials as is known in the art.

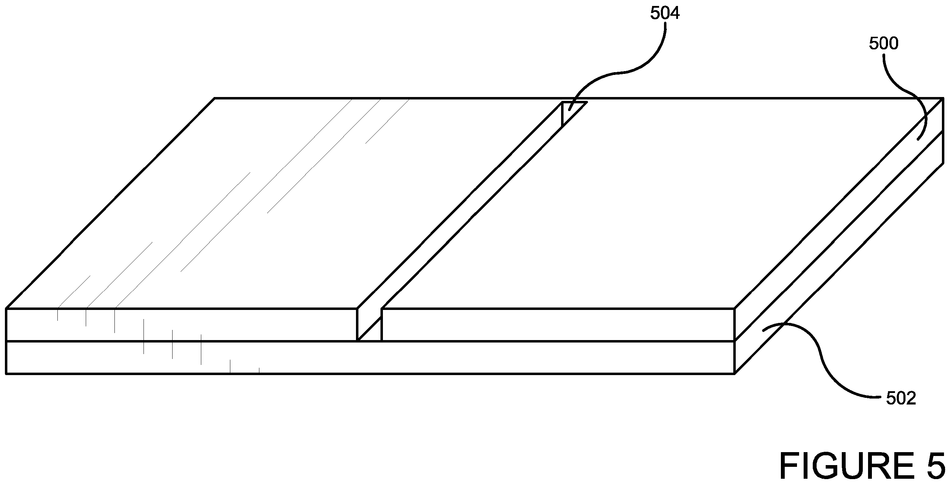

As shown in FIG. 5, in the present invention the flexible material is comprised of at least two layers to control the channel depth of channel 504. A first material layer 500 absorbs laser energy at a given wavelength, (such as 200 nm to 10.6 nm), and a bottom second layer 502 does not. Thus, when the required channel shape is cut with a laser or other suitable device, the depth is controlled to that corresponding to the first material's 500 thickness.

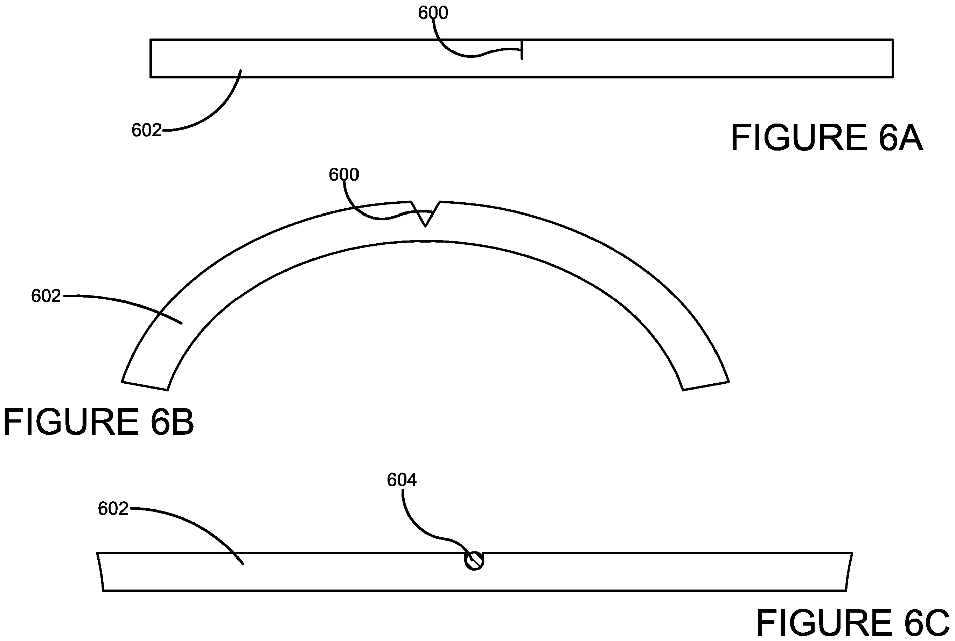

FIGS. 6A-C illustrate an alternative embodiment which utilizes a cut 600 in the flexible material 602. Specifically, a cut 600 is made in the flexible material 602 and then the cut 600 is opened up by bending. A conductor 604 such as a wire is then inserted into the opened cut 600 and the flexible material 602 is returned to a flat state, thus trapping the wire within the flexible material 602. When using a flexible material 602 such as fabric for a thin wire, the compliance of the flexible material 602 prevents distortion of the substrate.

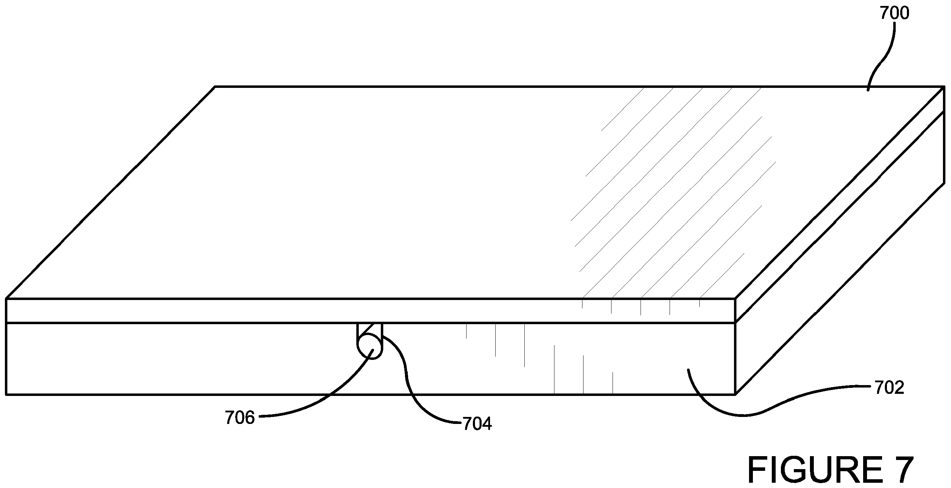

Additionally, FIG. 7 illustrates the flexible material 702 with a channel 704 containing a conductor 706 as described above, but further comprising a second layer 700 over-laminated on top of the flexible base material 702. The second layer 700 over-laminated on top can be used for multiple purposes, such as retaining the conductor 706, sealing the conductor 706, and/or presenting a smooth printable surface. Further, the second layer 700 can be comprised of any suitable material as is known in the art.

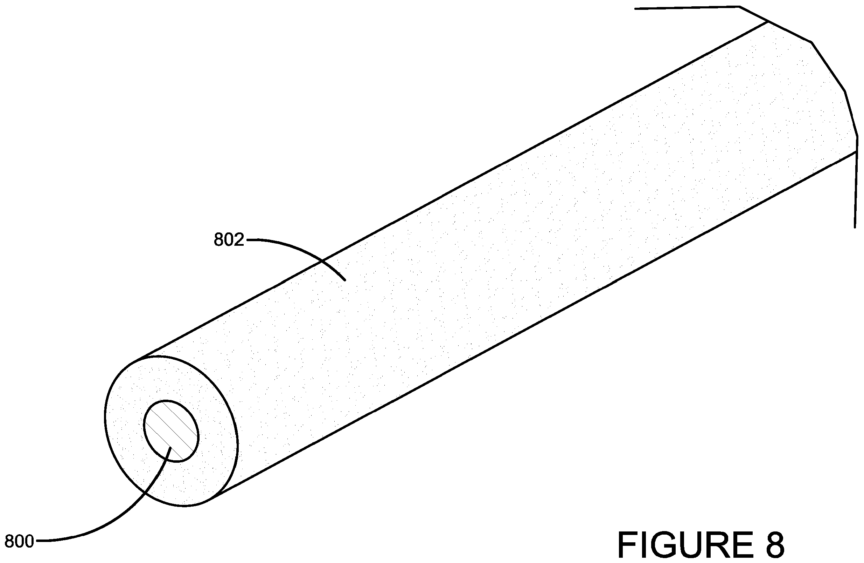

FIG. 8 illustrates a wire 800 with an additional coating 802 on its outside. The coating 802 has an initial state where the wire 800 is dry and has low adhesion, to make it easier to feed into the channel. The coating 802 has a second state where it becomes an adhesive and may become permanently cured at this point. For example, the wire 800 can have a hot melt coating 802 on it. The action of passing the flexible material with the conductor (the wire) in the channel through a pair of hot rollers will cause the adhesive to melt, sticking the wire 800 to the edges of the channel and, if required, the edges of the channel together.

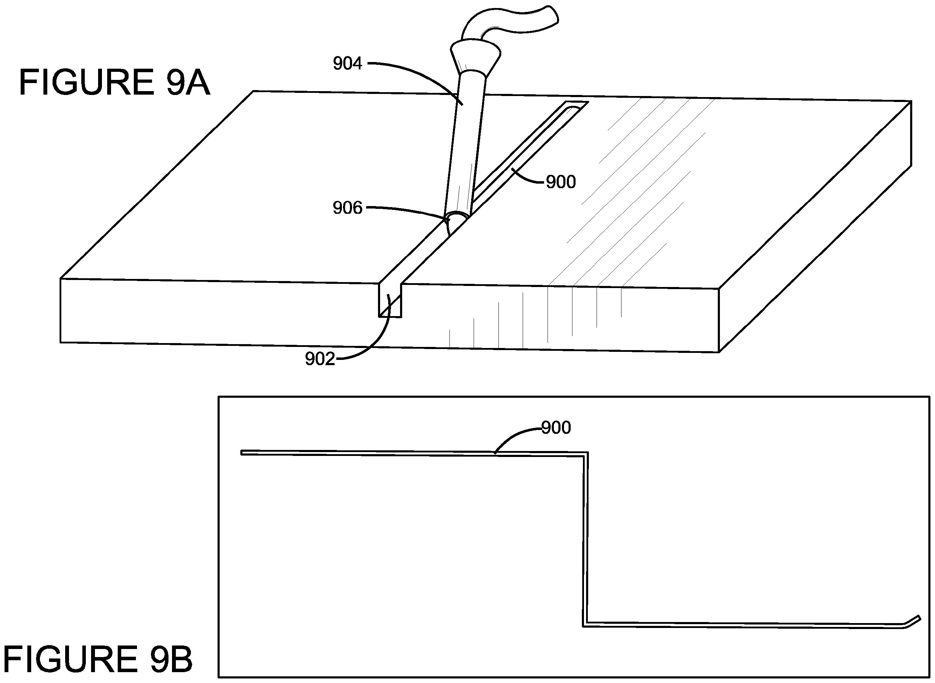

FIGS. 9A-B illustrate a wire 900 being guided into the channel 902 by a wire dispensing device 904. The wire dispensing device 904 comprises a tip or dispensing head 906 that is engaged into the channel 902, making the definition of the wire shape to be only the initial formation of the channel 902. For example, the wire dispensing device 904 simply rides in the channel 902 without electrical control of position. To facilitate this in delicate flexible materials, the flexible material may be temporarily stiffened by means such as reducing the temperature or having the fabric preimpregnated with a material such as starch or PVA that can be easily washed out after processing and potentially re-used, or any other suitable method as is known in the art.

In another embodiment, the dispensing tip is heated to a temperature that can locally melt fabric before dispensing the wire into the channel formed; the hot tip and dispenser can be followed by a relatively flat structure that seals the channel pushing the edges of the channel together whilst still hot and fluid.

## Claims

1. A flexible radio-frequency identification, RFID, tag device (100) comprising:
a flexible material (104);
a channel (102, 504) formed in the flexible material;
a conductor positioned in the channel, wherein the conductor forms an antenna (106) for said RFID tag device when coupled to an RFID chip,
**characterized in that**
the flexible material is comprised of a top layer (500) and a bottom layer (502), wherein the top layer is capable of absorbing laser energy at a given wavelength and the bottom layer does not absorb laser energy at said given wavelength.

2. The RFID tag device of claim 1 wherein the flexible material (104) comprises fabric, cloth, or canvas.

3. The RFID tag device of claim 1 or claim 2 wherein the channel (102, 504) does not extend through a total depth of the flexible material (104).

4. The RFID tag device of claims 1 to 3 wherein the channel (102, 504) is formed via at least one of ablation, abrasion, milling or chemical means.

5. The RFID tag device of claim 1 wherein the conductor comprises at least one of a copper wire (200), a copper alloy wire, an aluminum wire, or a silver coated wire.

6. The RFID tag device of claim 1 wherein the conductor comprises a conductive ink (300).

7. The RFID tag device of claim 6 wherein in addition to the conductive ink (300) the channel (102, 504) is filled with additional conductive fillers such as at least one of copper, silver, graphene, or a combination of these additional conductive fillers.

8. The RFID tag device of claim 1 wherein the conductor (400) is a rectangular cross-section of a tape or a section of a conductive mesh made from copper wire.

9. The RFID tag device of claim 1 further comprising a second layer (700) over-laminated on top of the flexible material (104) for retaining the conductor, sealing the conductor, or presenting a smooth printable surface.

10. The RFID tag device of claim 1 wherein the conductor comprises a wire (800) with an external coating (802), and further wherein the external coating has an initial state where the wire is dry and has low adhesion and a second state where the coating becomes an adhesive and the wire may become permanently cured at the second state.

11. The RFID tag device of claim 1 wherein the channel (102, 504) is cut into the flexible material (104) with a laser and only extends through the top layer.

12. The RFID tag device of claim 5 wherein the wire conductor (900) is guided into the channel by a wire dispensing device (904) that comprises a dispensing head (906) that is engaged into the channel (102, 504, 902).

## Patentansprüche

1. Flexible Hochfrequenz-Identifikations-Tag-Vorrichtung, RFID-Tag-Vorrichtung, (100), umfassend:
ein flexibles Material (104);
einen Kanal (102, 504), der in dem flexiblen Material ausgebildet ist;
einen Leiter, der in dem Kanal positioniert ist, wobei der Leiter eine Antenne (106) für die RFID-Tag-Vorrichtung ausbildet, wenn er mit einem RFID-Chip gekoppelt ist, **dadurch gekennzeichnet, dass**
das flexible Material aus einer oberen Schicht (500) und einer unteren Schicht (502) besteht, wobei die obere Schicht in der Lage ist, Laserenergie bei einer gegebenen Wellenlänge zu absorbieren, und die untere Schicht Laserenergie bei der gegebenen Wellenlänge nicht absorbiert.

2. RFID-Tag-Vorrichtung nach Anspruch 1, wobei das flexible Material (104) Gewebe, Stoff oder Tuch umfasst.

3. RFID-Tag-Vorrichtung nach Anspruch 1 oder Anspruch 2, wobei sich der Kanal (102, 504) nicht durch eine Gesamttiefe des flexiblen Materials (104) erstreckt.

4. RFID-Tag-Vorrichtung nach den Ansprüchen 1 bis 3, wobei der Kanal (102, 504) mittels mindestens eines von Ablation, Abschleifen, Fräsen oder chemischen Mitteln ausgebildet wird.

5. RFID-Tag-Vorrichtung nach Anspruch 1, wobei der Leiter mindestens einen Kupferdraht (200), einen Kupferlegierungsdraht, einen Aluminiumdraht oder einen silberbeschichteten Draht umfasst.

6. RFID-Tag-Vorrichtung nach Anspruch 1, wobei der Leiter eine leitfähige Tinte (300) umfasst.

7. RFID-Tag-Vorrichtung nach Anspruch 6, wobei zusätzlich zu der leitfähigen Tinte (300) der Kanal (102, 504) mit zusätzlichen leitfähigen Füllstoffen gefüllt ist, wie etwa mindestens einem von Kupfer, Silber, Graphen oder einer Kombination dieser zusätzlichen leitfähigen Füllstoffe.

8. RFID-Tag-Vorrichtung nach Anspruch 1, wobei der Leiter (400) ein rechteckiger Querschnitt eines Bandes oder ein Abschnitt eines leitenden Gitters aus Kupferdraht ist.

9. RFID-Tag-Vorrichtung nach Anspruch 1, ferner umfassend eine zweite Schicht (700), die oben auf das flexible Material (104) auflaminiert ist, um den Leiter zu halten, den Leiter abzudichten oder eine glatte bedruckbare Oberfläche zu bieten.

10. RFID-Tag-Vorrichtung nach Anspruch 1, wobei der Leiter einen Draht (800) mit einer äußeren Beschichtung (802) umfasst und wobei ferner die äußere Beschichtung einen Anfangszustand, in dem der Draht trocken ist und eine geringe Haftung aufweist, und einen zweiten Zustand aufweist, in dem die Beschichtung zu einem Haftmittel wird und der Draht in dem zweiten Zustand dauerhaft gehärtet werden kann.

11. RFID-Tag-Vorrichtung nach Anspruch 1, wobei der Kanal (102, 504) mit einem Laser in das flexible Material (104) geschnitten ist und sich nur durch die obere Schicht erstreckt.

12. RFID-Tag-Vorrichtung nach Anspruch 5, wobei der Drahtleiter (900) in den Kanal durch eine Drahtausgabevorrichtung (904) geführt wird, die einen Ausgabekopf (906) umfasst, der in den Kanal (102, 504, 902) eingreift.

## Revendications

1. Dispositif d'étiquette d'identification par radiofréquence, RFID, flexible (100) comprenant :
un matériau flexible (104) ;
un canal (102, 504) formé dans le matériau flexible ;
un conducteur positionné dans le canal, dans lequel le conducteur forme une antenne (106) pour ledit dispositif d'étiquette RFID lorsqu'il est couplé à une puce RFID,
**caractérisé en ce que**
le matériau flexible est composé d'une couche supérieure (500) et d'une couche inférieure (502), dans lequel la couche supérieure est capable d'absorber l'énergie laser à une longueur d'onde donnée et la couche inférieure n'absorbe pas l'énergie laser à ladite longueur d'onde donnée.

2. Dispositif d'étiquette RFID selon la revendication 1, dans lequel le matériau flexible (104) comprend un tissu, une étoffe ou une toile.

3. Dispositif d'étiquette RFID selon la revendication 1 ou la revendication 2, dans lequel le canal (102, 504) ne s'étend pas à travers une profondeur totale du matériau flexible (104).

4. Dispositif d'étiquette RFID selon les revendications 1 à 3, dans lequel le canal (102, 504) est formé via au moins l'un d'un moyen d'ablation, d'abrasion, de fraisage ou chimique.

5. Dispositif d'étiquette RFID selon la revendication 1, dans lequel le conducteur comprend au moins l'un d'un fil de cuivre (200), d'un fil d'alliage de cuivre, d'un fil d'aluminium ou d'un fil revêtu d'argent.

6. Dispositif d'étiquette RFID selon la revendication 1, dans lequel le conducteur comprend une encre conductrice (300).

7. Dispositif d'étiquette RFID selon la revendication 6, dans lequel, en plus de l'encre conductrice (300), le canal (102, 504) est rempli de charges conductrices supplémentaires telles qu'au moins l'un parmi le cuivre, l'argent, le graphène ou une combinaison de ces charges conductrices supplémentaires.

8. Dispositif d'étiquette RFID selon la revendication 1, dans lequel le conducteur (400) est une section transversale rectangulaire d'un ruban ou une section d'une maille conductrice constituée de fil de cuivre.

9. Dispositif d'étiquette RFID selon la revendication 1, comprenant en outre une seconde couche (700) contre-laminée au-dessus du matériau flexible (104) pour retenir le conducteur, étanchéifier le conducteur ou présenter une surface imprimable lisse.

10. Dispositif d'étiquette RFID selon la revendication 1, dans lequel le conducteur comprend un fil (800) avec un revêtement externe (802), et en outre dans lequel le revêtement externe comporte un état initial dans lequel le fil est sec et comporte une faible adhérence et un second état dans lequel le revêtement devient un adhésif et le fil peut durcir de manière permanente au second état.

11. Dispositif d'étiquette RFID selon la revendication 1, dans lequel le canal (102, 504) est découpé dans le matériau flexible (104) avec un laser et s'étend uniquement à travers la couche supérieure.

12. Dispositif d'étiquette RFID selon la revendication 5, dans lequel le fil conducteur (900) est guidé dans le canal par un dispositif de distribution de fil (904) qui comprend une tête de distribution (906) qui est engagée dans le canal (102, 504, 902).
